# EUROPEAN PATENT APPLICATION

(11) **EP 4 283 222 A1**
(43) Date of publication of application: **29.11.2023**
(21) Application number: 23172938.5
(22) Date of filing: 11.05.2023
(51) Int. Cl.: F25B 43/00

(54) **REFRIGERATION SYSTEM COMPRISING A PURGE SYSTEM AND ASSOCIATED METHOD OF OPERATING A PURGE SYSTEM**

(30) Priority: 26.05.2022 US 202263346119 P
(71) Applicant: Carrier Corporation, Palm Beach Gardens, FL 33418 (US)
(72) Inventor: CHAKRABORTY, Subhrajit, Charlotte, 28269 (US); STARK, Michael, Charlotte, 28269 (US); RANJAN, Rajiv, Bradenton, 34202 (US); LI, Hsihua, Charlotte, 28269 (US)
(74) Representative: Dehns

(57) **Abstract**

A refrigeration system 10 includes a vapor compression loop and a purge system 30 in communication with the vapor compression loop. The purge system 30 includes: a separator 32 for separating contaminants from a purge gas provided from the vapor compression loop to the separator 32; and a movement mechanism 42 operable to increase a pressure of the purge gas. The pressure of the purge gas drives the purge gas through the separator 32.

## Description

### BACKGROUND

Exemplary embodiments of the present disclosure relate generally to chiller or refrigeration systems used in heating, ventilation, and air conditioning (HVAC) systems, and more particularly to a purge system for removing contaminants from HVAC systems.

Chiller systems such as those utilizing centrifugal compressors may include sections that operate below atmospheric pressure. As a result, leaks in the chiller system may draw air into the system, contaminating the refrigerant. This contamination degrades the performance of the chiller system. To address this problem, existing low-pressure chillers include a purge system to remove contamination. Existing purge systems use a vapor compression cycle to separate contaminant gas from the refrigerant. Existing purge systems are large, complex, and sometimes lose refrigerant in the process of removing contamination.

### BRIEF DESCRIPTION

According to an aspect, a refrigeration system includes a vapor compression loop and a purge system in communication with the vapor compression loop. The purge system includes a separator configured for separating contaminants from a purge gas provided from the vapor compression loop to the separator and a movement mechanism operable to increase a pressure of the purge gas. The pressure of the purge gas drives the purge gas through the separator.

In addition to one or more of the features described above, or as an alternative, in further embodiments the pressure of the purge gas downstream from the movement mechanism is greater than 40 psia.

In addition to one or more of the features described above, or as an alternative, in further embodiments the pressure of the purge gas downstream from the movement mechanism is greater than 60 psia.

In addition to one or more of the features described above, or as an alternative, in further embodiments the movement mechanism is a compressor.

In addition to one or more of the features described above, or as an alternative, in further embodiments the purge system further comprises a phase separator fluidly coupled to the movement mechanism and to the separator.

In addition to one or more of the features described above, or as an alternative, in further embodiments the phase separator includes a first outlet in fluid communication with the separator and a second outlet in fluid communication with the vapor compression system.

In addition to one or more of the features described above, or as an alternative, in further embodiments liquid refrigerant within the phase separator is returned to the vapor compression system via the second outlet.

In addition to one or more of the features described above, or as an alternative, in further embodiments the separator further comprises a separating material operable to separate the contaminants from the purge gas provided from the vapor compression system.

In addition to one or more of the features described above, or as an alternative, in further embodiments the separating material further comprises at least one membrane.

In addition to one or more of the features described above, or as an alternative, in further embodiments the at least one membrane includes a porous material having pores sized to allow the contaminants to pass through the at least one membrane and restrict a flow of a refrigerant through the at least one membrane.

In addition to one or more of the features described above, or as an alternative, in further embodiments a first side of the at least one membrane is fluidly coupled to the first outlet of the phase separator.

In addition to one or more of the features described above, or as an alternative, in further embodiments the separating material includes a sorbent material.

In addition to one or more of the features described above, or as an alternative, in further embodiments the purge system further comprises a heat exchanger arranged downstream from the movement mechanism and upstream from the phase separator.

In addition to one or more of the features described above, or as an alternative, in further embodiments the heat exchanger is a condenser operable to cool the purge gas therein.

According to an aspect, a method of operating a purge system includes circulating a refrigerant through a vapor compression loop, receiving a purge gas from the vapor compression loop at the purge system, the purge gas including the refrigerant and contaminants, pressurizing the purge gas via a movement mechanism to form a pressurized purge gas, and separating the contaminants from the purge gas within the separator. A pressure of the pressurized purge gas drives a flow of the contaminants of the purge gas through a separator.

In addition to one or more of the features described above, or as an alternative, in further embodiments comprising separating the purge gas into a vapor phase and a liquid phase within a phase separator.

In addition to one or more of the features described above, or as an alternative, in further embodiments comprising condensing at least a portion of the refrigerant within the purge gas upstream from the phase separator.

In addition to one or more of the features described above, or as an alternative, in further embodiments condensing at least the portion of the refrigerant within the purge gas further comprises passing the pressurized purge gas through a condenser heat exchanger.

In addition to one or more of the features described above, or as an alternative, in further embodiments condensing at least the portion of the refrigerant within the purge gas occurs as the purge gas flows through a conduit coupling the movement mechanism to the phase separator.

In addition to one or more of the features described above, or as an alternative, in further embodiments comprising returning the refrigerant of the purge gas to the vapor compression loop.

### BRIEF DESCRIPTION OF THE DRAWINGS

The following descriptions should not be considered limiting in any way. With reference to the accompanying drawings, like elements are numbered alike. Certain exemplary embodiments will now be described in greater detail by way of example only and with reference to the accompanying drawings in which:
FIG. 1 is a schematic diagram of an exemplary vapor compression loop of a heating, ventilation, and air conditioning (HVAC) system;
FIG. 2 is a schematic depiction of a membrane purge system for an HVAC system; and
FIG. 3 is a schematic depiction of another membrane purge system for an HVAC system.

### DETAILED DESCRIPTION

A detailed description of one or more embodiments of the disclosed apparatus and method are presented herein by way of exemplification and not limitation with reference to the Figures.

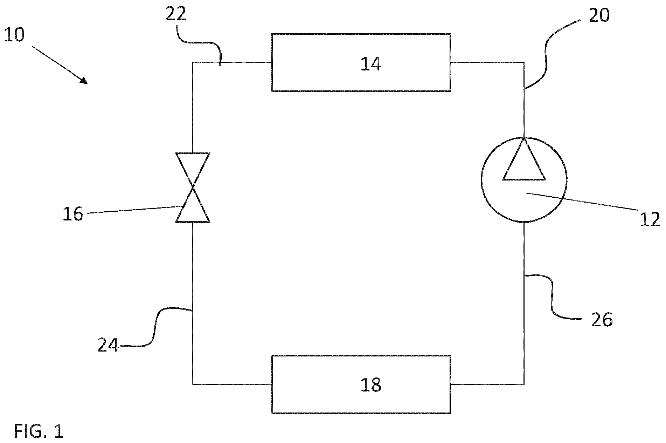

Referring now to FIG. 1, an example of a heating, ventilation, and air conditioning (HVAC) system 10 is illustrated. In certain instances, the HVAC system may be referred to as a refrigeration system. As used herein, the terms refrigeration system and/or HVAC system are intended to include any system capable of heating and/or cooling, such as a vapor compression system, a sorption system, a geothermal system, a waste heat recovery system, a heat-based cooling system, and a heating system. As shown, refrigeration system 10 includes a compressor 12, a condenser 14, an expansion valve 16, and an evaporator 18. The compressor 12 pressurizes heat transfer fluid in its gaseous state, which both heats the fluid and provides pressure to circulate it through the system. In some embodiments, the heat transfer fluid, or refrigerant, includes an organic compound. For example, in some embodiments, the refrigerant comprises at least one of a hydrocarbon, substituted hydrocarbon, a halogen-substituted hydrocarbon, a fluoro-substituted hydrocarbon, or a chloro-fluoro-substituted hydrocarbon.

The hot pressurized gaseous heat transfer fluid exiting from the compressor 12 flows through a conduit 20 to a heat rejection heat exchanger such as condenser 14. The condenser is operable to transfer heat from the heat transfer fluid to the surrounding environment, resulting in condensation of the hot gaseous heat transfer fluid to a pressurized moderate temperature liquid. The liquid heat transfer fluid exiting from the condenser 14 flows through conduit 22 to expansion valve 16, where the pressure is reduced. The reduced pressure heat transfer fluid exiting the expansion valve 16 flows through conduit 24 to a heat absorption heat exchanger such as evaporator 18. The evaporator 18 functions to absorb heat from the surrounding environment and boil the heat transfer fluid. Gaseous heat transfer fluid exiting the evaporator 18 flows through conduit 26 to the compressor 12, so that the cycle may be repeated.

The refrigeration system 10 has the effect of transferring heat from the environment surrounding the evaporator 18 to the environment surrounding the condenser 14. The thermodynamic properties of the heat transfer fluid must allow it to reach a high enough temperature when compressed so that it is greater than the environment surrounding the condenser 14, allowing heat to be transferred to the surrounding environment. The thermodynamic properties of the heat transfer fluid must also have a boiling point at its post-expansion pressure that allows the temperature surrounding the evaporator 18 to provide heat to vaporize the liquid heat transfer fluid.

Various types of refrigeration systems include a vapor compression loop as illustrated and described herein. One such refrigeration system is a chiller system. Portions of a refrigeration system, such as the cooler of a chiller system for example, may operate at a low pressure (e.g., less than atmosphere) which can cause contamination (e.g., ambient air or water or other environmental gasses) to be drawn into the fluid loop of the refrigeration system 10. The contamination degrades performance of the refrigeration system. To improve operation, the refrigeration system 10 system may additionally include a purge system 30 for removing contamination from the heat transfer fluid of the refrigeration system 10.

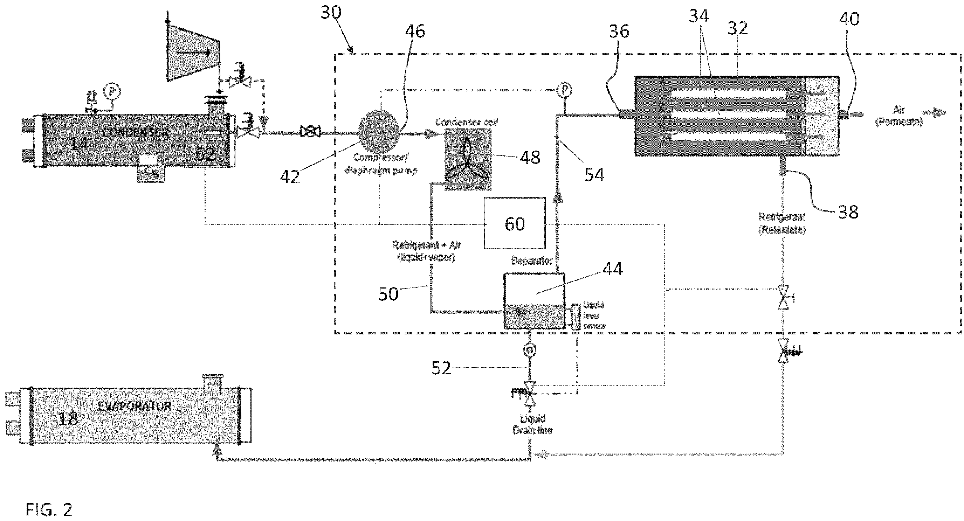

With reference now to FIG. 2, an example of a purge system 30 is illustrated in more detail. As shown, the purge system 30 includes at least one separator 32 configured to receive a flow of purge gas, which includes refrigerant gas and contaminants, such as nitrogen and oxygen for example. In the illustrated, non-limiting embodiment, the separator 32 includes a separating material 34 for separating contaminants from the refrigerant gas. In other embodiments, the separator 32 may include a vessel or housing containing one or more beds of sorbent material operable to separate a non-condensable gas from the purge gas through pressure swing sorption (PSA). Although a single separator 32 is illustrated, it should be understood that embodiments including a plurality of separators 32, arranged in series or parallel, are also contemplated herein.

In embodiments where the separating material 34 includes at least one membrane, the one or more membranes may include a polymeric material or a porous inorganic material. Examples of polymeric materials may include, but are not limited to Polytetrafluoroethylene, synthetic fluoropolymers of tetrafluoroethylene, Polystyrene, and Polypropylene. Examples of porous inorganic material can include ceramics such as metal oxides or metal silicates, more specifically aluminosilicates, (e.g., Chabazite Framework (CHA) zeolite, Linde type A (LTA) zeolite), porous carbon, porous glass, clays (e.g., Montmorillonite, Halloysite). Porous inorganic materials can also include porous metals such as platinum and nickel. Hybrid inorganic-organic materials such as a metal organic framework (MOF) can also be used. Other materials can be present in the membrane such as a carrier in which a microporous material can be dispersed, which can be included for structural or process considerations.

Metal organic framework materials are well-known in the art and comprise metal ions or clusters of metal ions coordinated to organic ligands to form one-, two- or three-dimensional structures. A metal-organic framework can be characterized as a coordination network with organic ligands containing voids. The coordination network can be characterized as a coordination compound extending, through repeating coordination entities, in one dimension, but with cross-links between two or more individual chains, loops, or spiro-links, or a coordination compound extending through repeating coordination entities in two or three dimensions. Coordination compounds can include coordination polymers with repeating coordination entities extending in one, two, or three dimensions. Examples of organic ligands include but are not limited to bidentate carboxylates (e.g., oxalic acid, succinic acid, phthalic acid isomers, etc.), tridentate carboxylates (e.g., citric acid, trimesic acid), azoles (e.g., 1,2,3-triazole), as well as other known organic ligands. A wide variety of metals can be included in a metal organic framework. Examples of specific metal organic framework materials include but are not limited to zeolitic imidazole framework (ZIF), HKUST-1.

In embodiments where the separating material 34 includes a sorbent material, the sorbent material may be a porous inorganic material. Examples of suitable sorbent materials include, but are not limited to, zeolites, activated carbon, ionic liquids, metal organic framework, oils, clay materials, and molecular sieves for example. When the bed of sorbent material is pressurized to a high, adsorption pressure, the more readily adsorbable component of the purge gas provided to the inlet 36 of the separator 32 is selectively adsorbed by the sorbent material and forms an adsorption front that passes from the inlet toward the outlet. The less readily adsorbable component of the purge gas passes through the bed of sorbent material 34 and is recovered from the outlet end thereof for further processing or use downstream. In the illustrated, non-limiting embodiment, the contaminant within the purge gas, such as oxygen for example, is the more readily adsorbable component, and the refrigerant is the less adsorbable component within the purge gas. Accordingly, if the purge gas is passed through a separator 32 containing a bed of sorbent material that attracts oxygen, part or all of the oxygen in the purge gas will stay within the bed of sorbent material. Consequently, the purge gas discharged from the outlet end 38 of the separator 32 will be richer in refrigerant than the purge gas entering the separator 32.

When the sorbent material reaches the end of its capacity to adsorb oxygen, the sorbent material can be regenerated by changing the pressure acting thereon. By reducing the pressure, the adsorbed oxygen will be released from the sorbent material and may be exhausted from the separator 32 via a secondary outlet 40, such as to the ambient atmosphere, external to the refrigeration circuit.

The separating material 34 may have pores and, in some embodiments, the pore sizes of the separating material 34 can be characterized by a pore size distribution with an average pore size from 2.5 Å to 10.0 Å, and a pore size distribution of at least 0.1 Å. In some embodiments, the average pore size for the porous material can be in a range with a lower end of 2.5 Å to 4.0 Å and an upper end of 2.6 Å to 10.0 Å. A. In some embodiments, the average pore size can be in a range having a lower end of 2.5 Å, 3.0 Å, 3.5 Å, and an upper end of 3.5 Å, 5.0 Å, or 6.0 Å. These range endpoints can be independently combined to form a number of different ranges, and all ranges for each possible combination of range endpoints are hereby disclosed. Porosity of the material can be in a range having a lower end of 5%, 10%, or 15%, and an upper end of 85%, 90%, or 95% (percentages by volume). These range endpoints can be independently combined to form a number of different ranges, and all ranges for each possible combination of range endpoints are hereby disclosed.

The above microporous materials can be synthesized by hydrothermal or solvothermal techniques (e.g., sol-gel) where crystals are slowly grown from a solution. Templating for the microstructure can be provided by a secondary building unit (SBU) and the organic ligands. Alternate synthesis techniques are also available, such as physical vapor deposition or chemical vapor deposition, in which metal oxide precursor layers are deposited, either as a primary microporous material, or as a precursor to an MOF structure formed by exposure of the precursor layers to sublimed ligand molecules to impart a phase transformation to an MOF crystal lattice.

In some embodiments, the above-described membrane materials can provide a technical effect of promoting separation of contaminants (e.g., nitrogen, oxygen and/or water molecules) from refrigerant gas, which is condensable. Other air-permeable materials, such as porous or non-porous polymers can be subject to solvent interaction with the matrix material, which can interfere with effective separation. In some embodiments, the capabilities of the materials described herein can provide a technical effect of promoting the implementation of a various example embodiments of refrigeration systems with purge, as described in more detail with reference to the example embodiments below.

The separating material 34 can be self-supporting or it can be supported, for example, as a layer on a porous support or integrated with a matrix support material. In some embodiments, thickness of a support for a supported membrane can range from 50 nm to 1000 nm, more specifically from 100 nm to 750 nm, and even more specifically from 250 nm to 500 nm. In the case of tubular membranes, fiber diameters can range from 100 nm to 2000 nm, and fiber lengths can range from 0.2 m to 2 m.

In some embodiments, the microporous material can be deposited on a support as particles in a powder or dispersed in a liquid carrier using various techniques such as spray coating, dip coating, solution casting, etc. The dispersion can contain various additives, such as dispersing aids, rheology modifiers, etc. Polymeric additives can be used; however, a polymer binder is not needed, although a polymer binder can be included and in some embodiments is included such as with a mixed matrix membrane comprising a microporous inorganic material (e.g., microporous ceramic particles) in an organic (e.g., organic polymer) matrix. However, a polymer binder present in an amount sufficient to form a contiguous polymer phase can provide passageways in the membrane for larger molecules to bypass the molecular sieve particles. Accordingly, in some embodiments a polymer binder is excluded. In other embodiments, a polymer binder can be present in an amount below that needed to form a contiguous polymer phase, such as embodiments in which the membrane is in series with other membranes that may be more restrictive. In some embodiments, particles of the microporous material (e.g., particles with sizes of 0.01 µm to 10 mm, or in some embodiments from 0.5 µm to 10 µm) can be applied as a powder or dispersed in a liquid carrier (e.g., an organic solvent or aqueous liquid carrier) and coated onto the support followed by removal of the liquid. In some embodiments, the application of solid particles of microporous material from a liquid composition to the support surface can be assisted by application of a driving force across the support.

For example, a vacuum can be applied from the opposite side of the support as the liquid composition comprising the solid microporous particles to assist in application of the solid particles to the surface of the support. A coated layer of microporous material can be dried to remove residual solvent and optionally heated to fuse the microporous particles together into a contiguous layer. Various membrane structure configurations can be utilized, including but not limited to flat or planar configurations, tubular configurations, or spiral configurations. In some embodiments, the membrane can include a protective polymer coating or can utilize or can utilize backflow or heating to regenerate the membrane.

In some embodiments, the microporous material can be configured as nanoplatelets, such as zeolite nanosheets for example. Zeolite nanosheet particles can have thicknesses ranging from 2 to 50 nm, more specifically 2 to 20 nm, and even more specifically from 2 nm to 10 nm. Zeolite such as zeolite nanosheets can be formed from any of various zeolite structures, including but not limited to framework type MFI, MWW, FER, LTA, FAU, and mixtures of the preceding with each other or with other zeolite structures. In a more specific group of exemplary embodiments, the zeolite such as zeolite nanosheets can comprise zeolite structures selected from MFI, MWW, FER, LTA framework type. Zeolite nanosheets can be prepared using known techniques such as exfoliation of zeolite crystal structure precursors. For example, MFI and MWW zeolite nanosheets can be prepared by sonicating the layered precursors (multilamellar silicalite-1 and ITQ-1, respectively) in solvent. Prior to sonication, the zeolite layers can optionally be swollen, for example with a combination of base and surfactant, and/or melt-blending with polystyrene. The zeolite layered precursors are typically prepared using conventional techniques for preparation of microporous materials such as sol-gel methods.

With continued reference to FIG. 2, the purge system 30 additionally includes a movement mechanism 42 and a phase separator 44. The movement mechanism 42 may be any suitable device operable to move the purge gas through the purge system 30, including but not limited to a compressor or a diaphragm. As shown, the movement mechanism 42 may be configured to receive purge gas from a purge connection 45 of the condenser 14 and is operable to increase the temperature and pressure of the purge gas provided thereto. In an embodiment, the purge gas provided at an outlet 46 of the movement mechanism 42 has a pressure greater than 40psia, and in some embodiments equal to or greater than 50 psia, 55psia, 60psia, 62psia, or 64psia. Because the secondary outlet 40 of the separator 32 is open to the ambient atmosphere, the difference between the pressure of the purge gas at the outlet 46 of the compressor 42 and the pressure of the ambient atmosphere (~14psi or ~96.5kPa) is sufficient to propel the purge gas through the purge system 30. Accordingly, the pressure of the purge gas itself may function as the driving force for passing the contaminant molecules through the separating material 34, such that the contaminant molecules collect therein, or exit from a second side of the separating material 34 through the secondary outlet 40 of the purge system 30.

In the illustrated, non-limiting embodiment of FIG. 2, a condenser 48 is located directly downstream from the outlet 46 of the movement mechanism 42. At the condenser 48, the purge gas is arranged in a heat exchange relationship with a flow of a secondary medium, such as air pushed or pulled across the coils of the condenser by a fan for example. Within the condenser 48, heat is transferred from the purge gas to the secondary fluid. This heat transfer causes at least a portion of the refrigerant within the purge gas to condense into a liquid. The resulting two-phase mixture of vapor phase and liquid phase refrigerant and air is then provided to the phase separator 44.

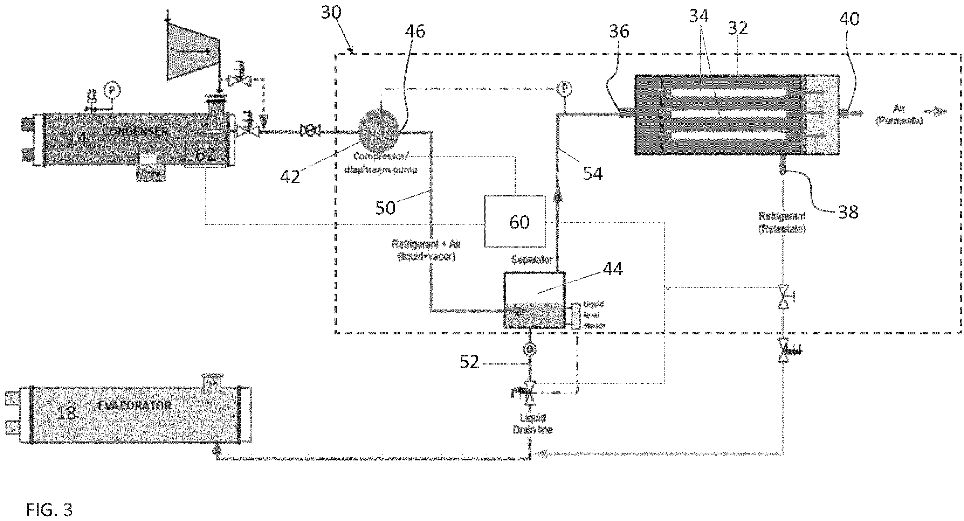

In another embodiment, best shown in FIG. 3, the purge system 30 need not include a condenser 48. Rather, as the vapor purge gas flows through a conduit 50 from the outlet 46 of the compressor 42 to the phase separator 44, the purge gas is cooled via conduction, and in some embodiments, heat is transferred to a fluid surrounding the conduit 50, such as ambient air for example. As a result of this heat transfer, at least a portion of the refrigerant of the purge gas provided to the phase separator 44 has condensed into a liquid. By increasing the pressure of the purge gas at a location upstream from the phase separator 44, the amount of refrigerant that can be condensed and removed from the purge gas at a location upstream from the separator 32 is improved relative to existing purge systems. Accordingly, the purge gas provided to the separator 32 is mostly pure air.

Within the phase separator 44, the liquid refrigerant is separated from the vapor purge gas via gravity. The liquid refrigerant collected at a first side of the phase separator 44, such as at the bottom thereof, may be returned to the vapor compression loop 10, such as to the evaporator 18 for example, through a first outlet and a conduit illustrated at 52. The vapor outlet of the phase separator 44 is fluidly connected to the inlet 36 of the separator 32 via a second outlet and a conduit 54 and is configured to provide a vapor purge gas thereto.

With continued reference to FIGS. 2 and 3, a controller 60 may be operable to actively control operation of the purge system 30, such as operation of the movement mechanism 42 and/or a position of one or more valves for example, in response to one or more sensed parameters of the purge system 30. The purge system 30 may additionally include one or more sensors arranged in communication with the controller 60. In an embodiment, best shown in FIG. 2, the purge system 30 includes a sensor 62 for monitoring the pressure inside the condenser 14. In such embodiments, the sensor 62 provides a condenser pressure value to the controller 60, allowing the controller 50 to selectively operate the movement mechanism 42 in response to the condenser pressure value. For example, if the condenser pressure value indicates that the vapor compression loop 10 is non-operational, the controller 60 may initiate operation of the movement mechanism 42, and if the condenser pressure value indicates that the vapor compression loop 10 is operational, the controller 60 may cease operation of the movement mechanism 42. Although the sensor 62 is described as being operable to monitor the pressure inside the condenser 14, it should be understood that the sensor 62 may be located at any position suitable to detect the high side pressure of the refrigeration system 10, which is the pressure anywhere between the discharge of the compressor 12 and the inlet of the expansion valve 16 of the refrigeration system 10. Further, the one or more sensors 62 may be operable to monitor another suitable parameter, such as a saturation temperature for example.

A purge system 30 as illustrated and described herein has an increased air removal rate compared to existing purge gas systems. By increasing the pressure of the purge gas, the concentration of the air in the purge gas provided to the separator is also increased, resulting in improved performance of the membranes of the separator. The resulting system has a reduced cost and will allow the chiller to reach peak efficiency in minimal time.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A refrigeration system (10) comprising:
a vapor compression loop;
a purge system (30) in communication with the vapor compression loop, the purge system (30) comprising:
a separator (32) configured for separating contaminants from a purge gas provided from the vapor compression loop to the separator (32); and
a movement mechanism (42) operable to increase a pressure of the purge gas, wherein the pressure of the purge gas drives the purge gas through the separator (32).

2. The refrigeration system (10) of claim 1, wherein the pressure of the purge gas downstream from the movement mechanism (42) is greater than 40 psia or greater than 60 psia.

3. The refrigeration system (10) of claim 1 or 2, wherein the movement mechanism (42) is a compressor.

4. The refrigeration system (10) of any preceding claim, wherein the purge system (30) further comprises a phase separator (44) fluidly coupled to the movement mechanism (42) and to the separator (32), wherein the phase separator (44) optionally includes a first outlet (38) in fluid communication with the separator (32) and a second outlet (40) in fluid communication with the vapor compression system.

5. The refrigeration system (10) of claim 4, wherein liquid refrigerant within the phase separator (44) is returned to the vapor compression system via the second outlet (40).

6. The refrigeration system (10) of claim 4 or 5, wherein the separator (32) further comprises a separating material (34) operable to separate the contaminants from the purge gas provided from the vapor compression system, wherein the separating material (34) optionally further comprises at least one membrane.

7. The refrigeration system (10) of claim 6, wherein the at least one membrane includes a porous material having pores sized to allow the contaminants to pass through the at least one membrane and restrict a flow of a refrigerant through the at least one membrane.

8. The refrigeration system (10) of claim 6 or 7, wherein a first side of the at least one membrane is fluidly coupled to the first outlet (38) of the phase separator (44).

9. The refrigeration system (10) of claim 6, 7 or 8, wherein the separating material (34) includes a sorbent material.

10. The refrigeration system (10) of any of claims 4-9, wherein the purge system (30) further comprises a heat exchanger arranged downstream from the movement mechanism (42) and upstream from the phase separator (44), wherein optionally the heat exchanger is a condenser (48) operable to cool the purge gas therein.

11. A method of operating a purge system (30) comprising:
circulating a refrigerant through a vapor compression loop;
receiving a purge gas from the vapor compression loop at the purge system (30), the purge gas comprising the refrigerant and contaminants;
pressurizing the purge gas via a movement mechanism (42) to form a pressurized purge gas, wherein a pressure of the pressurized purge gas drives a flow of the contaminants of the purge gas through a separator (32); and
separating the contaminants from the purge gas within the separator (32).

12. The method of claim 11, further comprising separating the purge gas into a vapor phase and a liquid phase within a phase separator (44), and optionally further comprising condensing at least a portion of the refrigerant within the purge gas upstream from the phase separator (44).

13. The method of claim 12, wherein condensing at least the portion of the refrigerant within the purge gas further comprises passing the pressurized purge gas through a condenser heat exchanger (48).

14. The method of claim 12 or 13, wherein condensing at least the portion of the refrigerant within the purge gas occurs as the purge gas flows through a conduit (50) coupling the movement mechanism (42) to the phase separator (44).

15. The method of any of claims 11-14, further comprising returning the refrigerant of the purge gas to the vapor compression loop.
